# EUROPEAN PATENT SPECIFICATION

(11) **EP 0 817 344 B1**
(45) Date of publication and mention of the grant of the patent: **04.05.2005**
(21) Application number: 97109166.5
(22) Date of filing: 06.06.1997
(51) Int. Cl.: H02B 1/32, H02B 1/21, H02G 5/00

(54) **Improvement in metal cabinets housing live electric material**
Verbesserung von Metallschränken zur Aufnahme unter Spannung stehender elektrischer Geräte
Amélioration aux armoires métalliques contenant des parties électriques sous tension

(30) Priority: 03.07.1996 IT PN960028 U
(43) Date of publication of application: 07.01.1998
(73) Proprietor: Hager-Lumetal S.p.A., 33080 Porcia, Pordenone (IT)
(72) Inventor: Vendrametto, Maurizio, 33080 Porcia, Pordenone (IT); Dal Santo, Roberto, 33080 Roveredo in Piano, Pordenone (IT)
(74) Representative: Agostini, Agostino

(56) References cited:
- DE-A- 1 690 044
- DE-A- 2 717 134
- DE-A- 2 901 250
- DE-U- 7 130 388
- DE-U- 7 212 009
- DE-U- 7 409 895
- US-A- 4 034 271

## Description

### STATE OF THE ART

The present invention refers to a metal cabinet intended to house live electric material and apparatuses and provided with means adapted to support at least a conductive bar.

A cabinet with the features of the preamble of claim 1 is described in DE-A-29 01 250.

Conductive bars are means adapted to be connected to a power supply and energized to transport and distribute electric power, through cables with related wire terminals, in particular to the electric apparatuses that are housed in the cabinet.

The method is generally known according to which the means (made of a suitable electrically insulating material) needed to support such conductive bars are attached internally, usually by means of fastening screws, to the walls of the cabinets of the above cited kind. Other screws are then used jointly with the related lock nuts during the installation of the cabinets to firmly fasten the conductive bars to the related support elements. Finally, further screws, again of the metnc type, are used to fasten the terminals of the wires to the bars by making use of the threaded holes that are provided, regularly spaced (generally 25 mm from each other), over the entire length of the bars themselves.

This kind of construction, however, is scarcely efficient, since it can be carried out only at the installation site and generally requires a rather long assembly time.

### PURPOSES OF THE INVENTION

It is therefore a purpose of the present invention to provide such an improved construction of these cabinets intended to house live electric apparatuses and material as to enable their installation to be rationalized, in particular as far as the assembly of the conductive bars is concerned, thanks to the use of a particular support element which is of course made of a suitable electrically insulating material and allows for simple, convenient and quick installation at considerably lower costs.

This aim and other aims are reached in a cabinet having the features and characteristics as recited in the appended claims.

### SHORT DESCRIPTION OF THE ACCOMPANYING DRAWINGS

Anyway, in order to enable the present invention to be more readily and clearly understood along with its characteristics and advantages, a detailed description of a preferred embodiment thereof will be given below by way of non-limiting example with reference to the accompanying drawings, in which:

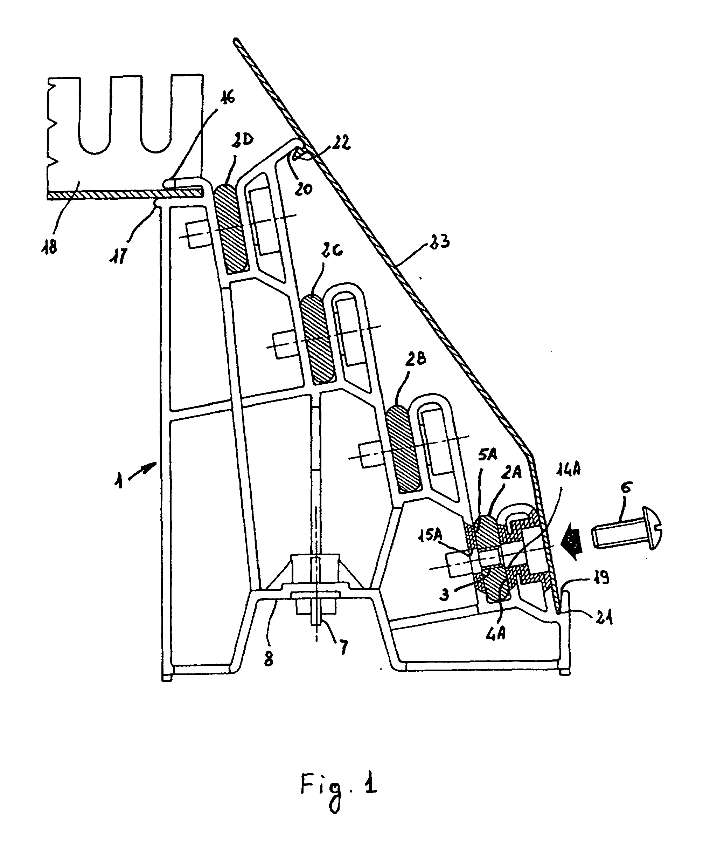

- Figure 1 is a side view of one of the support means for a plurality of conductive bars and associated flexible lead wires (power cables);
- Figure 2 is a perspective view from the bottom of the above cited support means, along with the section bar by means of which it is fixed to the cabinet housing the electric apparatuses.

It will anyway be appreciated that it is well within the capability of those skilled in the art to derive further embodiments and variants thereof, without departing from the scope of the present invention.

### DESCRIPTION OF THE INVENTION

It is assumed that the general construction of the metal cabinet for electric control and switching apparatuses is already well-known in the art. Most advantageously, although not exclusively, such a metal cabinet may be of the type described in the Italian utility-model applications PN96U000023, PN96U000024 and PN96U000025 filed on May 30, 1996 by the same Applicant. According to the present invention, the use is provided for, inside the cabinet, of a plurality of support elements, only one of which is actually illustrated in the accompanying drawing. Each one of said means, which are generally shown at 1, supports four conductive bars that are in turn indicated at 2A, 2B, 2C, 2D in the related Figure. For reasons of greater simplicity, the following description will only refer to the bar 2A, which is provided with threaded holes 3 distributed according to a regularly spaced pattern over the entire length thereof for the attachment, by means of metric fastening screws, of the terminals of the electric wires (not shown).

In an advantageous manner, a support element 1 is made in a single piece of an electrically insulating material, preferably of a plastic material complying with the applicable standard regulations and filled with flame-extinguishing additives.

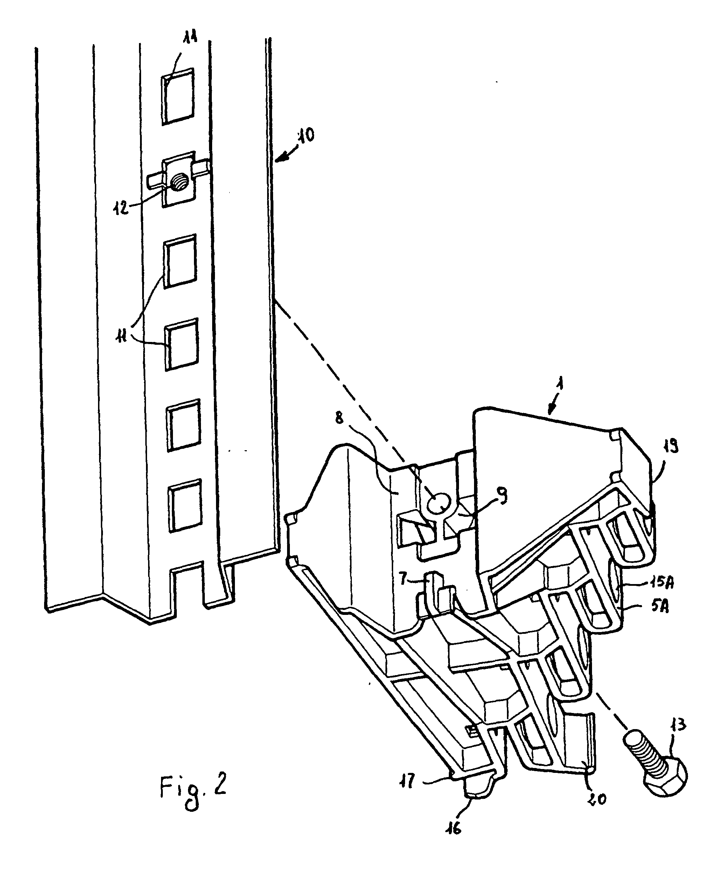

For the attachment of the support means 1 on to a wall of the cabinet, in particular the rear wall thereof, the use is provided for of a rigid metal section bar 10 having an "omega"-shaped cross-section and provided, all along its central side, with an alternate sequence of elongated eyelets 11 and circular holes 12. The attachment of a support means 1 to a section bar 10 is made in a very simple, convenient manner, since said means is first hooked on to an eyelet 11, wherein an undercut-like portion 7 provided at the base 8 thereof is snap-fitted into said eyelet, and is then fastened firmly thereto by means of a screw 13 that passes through a collar 9, which is also provided on the base 8 of the support means 1, and engages a circular hole 12, as this can best be seen in Figure 2.

In practice, the conductive bar 2A is mounted in the cabinet in a substantially vertical arrangement. According to a feature of the present invention, during installation each conductive bar is initially retained in position by interference by a pair of opposite surfaces 4A and 5A that are provided on the protruding portion of the support means 1.

According to a main feature of the present invention, it is only at a later moment during installation that the conductive bar 2A is fastened firmly to the related support means 1, and therefore to the cabinet, by means of a metric fastening screw 6 which engages directly one of the threaded holes 3. According to an embodiment of the invention the screw advantageously, is similar to the screws used to fasten the terminals of the associated electric wires to the conductive bars. To such a purpose, the above cited opposite surfaces 4A and 5A are provided with aligned circular holes 14A and 15A, respectively, for the shank of the screw 6. It goes without saying that this fastening operation is readily and most easily done by any installer. The possibility is furthermore given to conveniently assemble, in the above described manner, the various conductive bars on to the related support means outside the cabinet so as to build a sub-assembly for subsequent installation inside the cabinet.

According to a further particular embodiment of the present invention, from the protruding portion of the support means 1 there is projecting, in an opposite position with respect to the one of the afore mentioned pairs of opposite surfaces for the conductive bars, a pair of parallel tabs 16 and 17 provided to retain the edge of an end portion of a raceway 18 for electric cables that have at least a terminal enclosed in the cabinet. Said raceway 18 then extends transversally with respect to the bars and is supported, at the other end portion thereof, by a further support means which may be either similar to the above cited one or, for example, in the form of a support element for electric cables such as the one described in the Italian utility-model application no. PN96U000027 filed by the same Applicant.

The support means 1 finally comprises a grooved seat 19 and a resting seat 20 that are adapted to retain the longitudinal edges 21 and 22 of a removable electrically insulating protective screen 23 extending above the conductive bars.

### ADVANTAGES OF THE INVENTION

From the above description, the actual advantages of the present invention with respect to currently used, pnor-art cabinets clearly emerge, especially in terms of simple, convenient and low-cost installation of the conductive bars and the associated electric cables, further to the possibility for the same bars to be assembled on the related support means outside the cabinet, as this has already been indicated above.

## Claims

1. Metal cabinet for live electric apparatuses, inside which there are provided means that are made of an electncally insulating material and are adapted to support at least a conductive bar, said support means (1) being made integrally as a single-piece construction, each conductive bar (2A) being fastened to the cabinet by means of a single fastening means (6) for each one of said support means (1), said support means (1) being provided with opposing surfaces (4A, 5A) adapted to retain by interference the conductive bar (2A) before said fastening means (6) is tightened, said single fastening means (6) being a screw **characterized in that** the screw engages one of the threaded holes (3) that are provided along the conductive bars for the attachment of the terminals of associated electric wires, said screw passing through holes (14A, 15A) that are provided in said two opposing surfaces (4A, 5A).

2. Metal cabinet for live electric apparatuses according to claim 1, **characterized in that** on each one of said support means (1) there are retained a plurality of conductive bars (2A, ... 2D) arranged according to a substantially vertical direction.

3. Metal cabinet for live electric apparatuses according to claim 1, **characterized in that** on the base portion of said support means (1) there are provided at least two different types of fastening elements (7, 13) for attachment to a structural portion of the cabinet, preferably a section bar (10) of the rear wall thereof.

4. Metal cabinet for live electric apparatuses according to claim 3, **characterized in that** said two types of fastening elements for attachment to a structural portion of the cabinet consists of at least a screw (13) and an undercut-like element (7) adapted to engage associated apertures (12, 11) provided in the same structural portion (10).

5. Metal cabinet for live electric apparatuses according to claim 1, **characterized in that** on each one of said support means (1) there are further provided means (16, 17) adapted to retain the end portion of a raceway (18) for flexible electric cables.

6. Metal cabinet for live electric apparatuses according to claim 1, **characterized in that** on each one of said support means (1) there are provided seats (19, 20) adapted to retain side edges (21, 22) of at least an electrically insulating protective screen (23) extending above said conductive bars (2A, ... 2D).

## Patentansprüche

1. Metallschrank für unter Spannung stehende elektrische Geräte, in dem Mittel vorgesehen sind, die aus einem elektrisch isolierenden Material bestehen, und die dafür ausgelegt sind, wenigstens einen leitfähigen Block zu halten, wobei die Haltemittel (1) integral als einstückige Einheiten ausgebildet sind, jeder leitfähige Block (2A) an dem Schrank mittels eines einzelnen Befestigungsmittels (6) für jedes der Haltemittel (1) befestigt ist, jedes Haltemittel (1) mit einander gegenüberliegenden Flächen (4A, 5A) versehen ist, die dafür ausgelegt sind, durch wechselseitige Eingriffnahme den leitfähigen Block (2A) vor dem Festziehen des Befestigungsmittels (6) zu halten, und das einzelne Befestigungsmittel (6) eine Schraube ist, **dadurch gekennzeichnet, dass** die Schraube mit einem der Gewindelöcher (3) in Eingriff steht, die entlang der leitfähigen Blöcke zur Anbringung der Anschlüsse zugehöriger elektrischer Drähte vorgesehen sind, und dass die Schraube durch Löcher (14A, 15A) verläuft, die in den beiden einander gegenüberliegenden Flächen (4A, 5A) vorgesehen sind.

2. Metallschrank für unter Spannung stehende elektrische Geräte nach Anspruch 1, **dadurch gekennzeichnet, dass** an jedem der Haltemittel (1) eine Mehrzahl im Wesentlichen in vertikaler Richtung angeordneter leitfähiger Blöcke (2A, ..., 2D) gehalten ist.

3. Metallschrank für unter Spannung stehende elektrische Geräte nach Anspruch 1, **dadurch gekennzeichnet, dass** an jedem Basisabschnitt der Haltemittel (1) wenigstens zwei verschiedene Arten von Befestigungselementen (7, 13) zur Anbringung an einem Strukturabschnitt des Schrankes, vorzugsweise einem Formteil (10) der Hinterwand desselben, vorgesehen sind.

4. Metallschrank für unter Spannung stehende elektrische Geräte nach Anspruch 3, **dadurch gekennzeichnet, dass** die beiden Arten von Befestigungselementen zur Anbringung an einem Strukturabschnitt des Schrankes wenigstens eine Schraube (13) und ein unterschneidungsartiges Element (7) umfassen, das dafür ausgelegt ist, mit zugehörigen Öffnungen (12, 11) in Eingriff zu treten, die in demselben Strukturabschnitt (10) vorgesehen sind.

5. Metallschrank für unter Spannung stehende elektrische Geräte nach Anspruch 1, **dadurch gekennzeichnet, dass** an jedem der Haltemittel (1) des Weiteren Mittel (16, 17) vorgesehen sind, die dafür ausgelegt sind, den Endabschnitt eines Laufkanals (18) für flexible elektrische Kabel zu halten.

6. Metallschrank für unter Spannung stehende elektrische Geräte nach Anspruch 1, **dadurch gekennzeichnet, dass** an jedem der Haltemittel (1) Aufnahmen (19, 20) vorgesehen sind, die dafür ausgelegt sind, Seitenkanten (21, 22) wenigstens einer elektrisch isolierenden Schutzabdeckung (23) zu halten, die sich über den leitfähigen Blöcken (2A, ..., 2D) erstreckt.

## Revendications

1. Armoire métallique pour des dispositifs électriques sous tension, à l'intérieur de laquelle sont prévus des moyens réalisés en un matériau isolant de l'électricité et adaptés pour supporter au moins une barre conductrice, lesdits moyens supports **(1)** étant réalisés d'une seule pièce sous forme de construction monobloc, chaque barre conductrice **(2A)** étant fixée à l'armoire à l'aide de moyens de fixation **(6)** uniques pour chacun desdits moyens supports **(1)**, lesdits moyens supports **(1)** étant munis de surfaces **(4A, 5A)** en regard les unes des autres, adaptées pour retenir, par interférence, la barre conductrice **(2A)** avant de serrer lesdits moyens de fixation **(6)**, lesdits moyens de fixation **(6)** étant une vis, **caractérisée en ce que** la vis vient en prise avec l'un des trous taraudés **(3)**, ménagés le long des barres conductrices pour la fixation des bornes de fils électriques associés, ladite vis passant par des trous **(14A, 15A)** ménagés dans lesdites deux surfaces opposées **(4A, 5A)**.

2. Armoire métallique pour des dispositifs électriques sous tension selon la revendication 1, **caractérisée en ce que**, sur chacun desdits moyens supports **(1)**, est maintenue une pluralité de barres conductrices **(2A, - 2D)**, agencée suivant une direction sensiblement verticale.

3. Armoire métallique pour des dispositifs électriques sous tension selon la revendication 1, **caractérisée en ce que**, sur la partie de base desdits moyens supports **(1)** sont prévus au moins deux types différents d'éléments de fixation **(7, 13)**, pour fixation à une partie structurelle de l'armoire, de préférence une barre de section **(10)** de sa paroi arrière.

4. Armoire métallique pour des dispositifs électriques sous tension selon la revendication 3, **caractérisée en ce que** lesdits deux types d'éléments de fixation, prévus pour la fixation sur une partie structurelle de l'armoire, sont formés d'au moins une vis **(13)** et d'un élément **(7)** analogue à une contre-dépouille, adaptés pour s'engager dans des ouvertures **(12, 11)** associées, ménagées dans la même partie structurelle **(10)**.

5. Armoire métallique pour des dispositifs électriques sous tension selon la revendication 1, **caractérisée en ce que**, sur chacun desdits moyens supports **(1)** sont, en outre, prévus des moyens **(16, 17)** adaptés pour maintenir la partie d'extrémité d'un chemin de câbles **(18)**, pour des câbles électriques souples.

6. Armoire métallique pour des dispositifs électriques sous tension selon la revendication 1, **caractérisée en ce que**, sur chacun desdits moyens supports **(1)** sont prévus des sièges **(19, 20)** adaptés pour retenir des bords latéraux **(21, 22)** d'au moins un écran de protection **(23)** isolant de l'électricité, s'étendant au-dessus desdites barres conductrices **(2A, - 2D).**
